# EUROPEAN PATENT APPLICATION

(11) **EP 4 687 252 A1**
(43) Date of publication of application: **04.02.2026**
(21) Application number: 24191894.5
(22) Date of filing: 30.07.2024
(51) Int. Cl.: H02J 3/46, H02J 13/00

(54) **PROCESSING SYSTEM AND PROCESSING METHOD FOR AN ELECTRIC POWER SYSTEM**

(71) Applicant: Hitachi Energy Ltd, 8050 Zürich (CH)
(72) Inventor: Marino, David, Montreal H2R 2P1 (CA); Dawidowski, Pawel, 32-010 Luczyce (PL); Chmielowiec, Krzysztof, 32-089 Beblo (PL); Bomba, Piotr, 26-400 Lipno (PL); Giuntoli, Marco, 64521 Groß-Gerau (DE); Shirsat, Ashwin, Apex, NC 27502 (US); Poland, Jan, 5415 Nussbaumen (CH); Hilliard, Antony Foster, Montreal, Québec H2E1W4 (CA)
(74) Representative: Meier, Florian

(57) **Abstract**

A processing system (60) for an electric power system is operative to perform a node loadability analysis (71). The processing system (60) is operative to determine both a permissible active power range and a permissible reactive power range. The processing system (60) is operative to cause or enable outputting of a node loadability representation that combines a first indicator for the permissible active power range and a second indicator for the permissible passive power range.

## Description

### TECHNICAL FIELD

Embodiments of the invention relate to processing systems and methods for electric power system control and/or electric power system monitoring. Embodiments of the invention relate in particular to processing systems and methods operative to provide node loadability data.

### BACKGROUND

Power system control is a complex task. Computerized techniques are used to assist power system operators in the complex task of determining potentially abnormal situations and/or facilitating mitigating or corrective action responsive to a situation that requires attention.

Node loadability data is important for electric power system monitoring and control as it provides insight into the capacity of a node to accommodate additional load without compromising system stability and reliability. Based on the loadability of each node in an electric power system (e.g., a power grid), an allocation of resources and congestion resolution can be enhanced. Thus, the operator can be assisted in the complex task he or she is faced with.

In modern power grids with increasing penetration of renewable energy sources such as solar and wind, node loadability data becomes even more important. These intermittent sources of energy can create fluctuations in power generation, making it essential to have accurate loadability information to balance supply and demand in a timely manner, e.g., in real time. Based on the maximum load that can be accommodated at each node within the system settings, the placement of renewable resources can be enhanced and the risk of overloading nodes can be mitigated.

W.Q. Sun et al., "Power System Node Loadability Evaluation Using Flexibility Analysis Method," ELEKTRONIKA IR ELEKTROTECHNIKA, ISSN 1392-1215, VOL. 20, NO. 6, 2014 discloses techniques for transfer capability evaluation.

There is still a need for improved techniques that allow suitable actions to be taken in association with electric power system control and/or monitoring in view of node loadability. For illustration, screen space limitations in electric power system control and/or monitoring make it challenging to provide node loadability data in a compact yet comprehensive manner. Adding a further screen to the monitoring and/or control system has the potential of mitigating this issue, but entails the risk of operator distraction and/or loss of focus.

### SUMMARY

It is an object of the invention to provide methods and/or processing systems that provide enhanced techniques useful in association with node loadability data. It is in particular an object of the invention to provide such methods and/or processing systems that provide node loadability data in a compact yet comprehensive manner.

According to exemplary embodiments, a processing system and a method as recited in the independent claims are provided. The dependent claims define preferred or advantageous embodiments.

According to an aspect of the invention, there is provided a processing system for an electric power system. The processing system comprises at least one interface operative to receive operating data of the electric power system; and at least one processing circuit operative to process the operating data. The at least one processing circuit may be operative to: determine, based on the operating data, an active power and a reactive power of an operating point of a node of the electric power system; determine, based on the operating point, a permissible reactive power range for which a node voltage is within a permissible voltage range, and a permissible active power range for which the node voltage is within the permissible voltage range, the permissible reactive power range being determined for the active power of the operating point and the permissible active power range being determined for the reactive power of the operating point; and perform at least one interface control action to cause or enable outputting of a node loadability representation for the node that comprises: at least one first range indicator indicating the permissible active power range and/or at least one second range indicator indicating the permissible reactive power range, with the at least one first and/or second range indicator being arranged to extend along the direction.

Various effects and advantages are attained by the processing system. The processing system is operative to provide node loadability representation such that it can indicate the permissible reactive power range and/or the permissible active power range, respectively by graphical element(s) positioned along the direction such that their length(s) and/or spacing quantifies the permissible reactive power range and/or the permissible active power range. By providing the processing system operative to cause or enable outputting of the node loadability representation such that the graphical representation extends along the direction to quantify the permissible active power range and/or the permissible reactive power range, the node loadability data can be provided in a compact form. Moreover, as the representation is dependent on one coordinate along the direction, the processing system provides the node loadability representation in a manner that mitigates the risk of incorrect interpretation and that facilitates identification of the control action(s) to be taken.

The processing system may be operative to cause outputting of the node loadability representation such that it includes both the at least one first range indicator indicating the permissible active power range and the at least one second range indicator indicating the permissible reactive power range in an overlapping manner.

Thereby, the node loadability representation can be provided in a particularly compact and comprehensive manner, indicating the possible action that are viable to bring the operating point to a permissible operating region.

The at least one processing circuit may be operative to perform the at least one interface control action such that the node loadability representation further comprises an operating point indicator indicating the active power of the operating point.

Thereby, the processing system is operative to provide the node loadability representation such that it includes a quantitative indicator for the present operating point as compared to the permissible active power range and the permissible reactive power range. Thus, the processing system is operative such that the node loadability representation conveys the information on whether any adjustments need to be made and/or which adjustments are warranted or possible in a compact and comprehensive manner. This provides improved support for operating and/or monitoring the electric power system.

The at least one processing circuit may be operative to perform the at least one interface control action such that the operating point indicator indicates both the active power of the operating point and the reactive power of the operating point.

Thereby, the processing system is operative to indicate, using the node loadability representation in which a single coordinate along the direction quantifies power, both whether the active power is within the permissible active power range and whether the reactive power is in the permissible reactive power range, and/or which adjustments are warranted or possible to bring the operating point back to the permissible range.

The at least one processing circuit may be operative to determine a scaling factor for the at least one second range indicator relative to the at least one first range indicator based on the active power of the operating point and the reactive power of the operating point.

Thereby, the processing system is operative such that both the active power and the reactive power can be represented by the same operating point indicator, while accommodating possible differences in scale when determining a size and/or position of the at least one second range indicator relative to the at least one first range indicator.

The at least one processing circuit may be operative to further determine a stability boundary that, when exceeded by the operating point, would result in voltage collapse.

Thereby, the at least one processing circuit is operative to not only determine which power range is permissible (e.g., in the sense that they are within a predefined stability limits), but also to determine at what operating conditions there is a risk of voltage collapse.

The at least one processing circuit may be operative to perform the at least one interface control action such that the node loadability representation is further dependent on the stability boundary.

Thereby, the at least one processing circuit is operative to provide the node loadability representation taking into consideration the stability boundary and, more specifically, a distance of the present operating point from the stability boundary. Thereby, the processing system supports the operator in the complex tasks to be performed for power system monitoring and/or control. Stability of the electric power system can be assessed based on the node loadability representation.

The at least one processing circuit may be operative to perform the at least one interface control action such that a size of the operating point indicator is dependent on the stability boundary.

Thereby, the at least one processing circuit is operative to provide the node loadability representation such that the current operating point can be visualized in relation to the stability boundary.

The at least one processing circuit may be operative to determine the scaling factor for the at least one second range indicator relative to the at least one first range indicator based on the active power of the operating point, the reactive power of the operating point, and the stability boundary. Thereby, the processing system supports the operator in the complex tasks to be performed for power system monitoring and/or control, by facilitating assessment of stability of the electric power system.

Thereby, the at least one processing circuit is operative to provide the node loadability representation such that the current operating point can be visualized in relation to the stability boundary.

The at least one processing circuit may be operative to perform the at least one interface control action such that the at least one second range indicator is superimposed on the at least one first range indicator or vice versa.

Thereby, the node loadability representation can be generated and output in a manner that is particularly compact with regard to screen space usage. This facilitates the integration of the node loadability representation into, for example, a graphical network representation and/or mitigates issues otherwise caused by potential of operator distraction (e.g., when a separate screen is provided for the node loadability data).

The at least one processing circuit may be operative to perform a power flow processing to perform a node loadability and analysis, e.g., to determine the permissible reactive power range and the permissible active power range.

Thereby, the node loadability data can be established using processing techniques that provide the node loadability in a reliable and time-efficient manner, allowing the provision of the node loadability representation in a close to real time.

Alternatively or additionally, the at least one processing circuit may be operative to perform a dynamic system simulation and/or a sensitivity analysis to perform a node loadability analysis.

Thereby, the node loadability data can be established using processing techniques that provide the node loadability in a reliable and time-efficient manner, allowing the provision of the node loadability representation in a close to real time.

The at least one processing circuit may be operative to perform the at least one interface control action such that the direction is a linear direction.

Thereby, the processing system provides the node loadability data in a manner that is compact, facilitating its inclusion into an operator screen, while mitigating the risk of misinterpretation. This improves safety of electric power system monitoring and/or control.

The at least one processing circuit may be operative to perform the at least one interface control action to cause the node loadability representation to be output adjacent a representation of the node on a network representation of the electric power system.

Thereby, the initialization of the node loadability data can be combined with an integrated into a network topology representation. This further assists the operator in the complex tasks associated with electric power system monitoring and/or control, by spatially associating the node loadability representation with the node of a network representation to which the node loadability representation pertains.

The at least one processing circuit may be operative to determine a plurality of node loadability representations, each related to one of a plurality of nodes of the electric power system, and to perform the at least one interface control action to cause each of the node loadability representations to be output adjacent a representation of an associated node of the electric power system for which the respective node loadability representation has been determined.

Thereby, the processing system is operative to perform the node loadability analysis for each of the plurality of nodes of the electric power system and to generate associated node loadability representations. The compact representation of the node loadability representation facilitates inclusion of the node loadability representations into a network representation of the electric power system.

The processing system may be a processing system for an electric power system that is or comprises a transmission system, a distribution system, and/or a power grid.

Thereby, the processing system is operative to assist in the complex task of controlling and/or monitoring such an electric power system.

The processing system may be a processing system for an electric power system that is or comprises a distributed energy resource (DER).

Thereby, the processing system is operative to assist in the complex task of controlling and/or monitoring such an electric power system.

According to an aspect of the invention, there is provided a control and/or monitoring system for an electric power system, comprising the processing system of any aspect or embodiment disclosed herein.

The control and/or monitoring system provides the effects discussed in association with the processing system.

The control and/or monitoring system may be a control and/or monitoring system for an electric power system that is or comprises a transmission system, a distribution system, and/or a power grid.

Thereby, the control and/or monitoring system is operative to assist in the complex task of controlling and/or monitoring such an electric power system.

The control and/or monitoring system may be a control and/or monitoring system for an electric power system that is or comprises a distributed energy resource (DER).

Thereby, the control and/or monitoring system is operative to assist in the complex task of controlling and/or monitoring such an electric power system.

According to another aspect of the invention, there is provided an electric power system. The electric power system may comprise a primary system comprising primary system equipment; a secondary system operative to perform control and/or monitoring functions for the primary system; and the processing system of an aspect or embodiment operative to communicatively interface with the secondary system to obtain the monitoring data.

Various effects and advantages are attained by the electric power system, as discussed in association with the processing system and/or the control and/or monitoring system.

The electric power system may comprise a SCADA system which may comprise a control subsystem, wherein the processing system is operative to cause the control subsystem to perform a control action based on the node loadability analysis.

Thereby, the processing system can trigger, via the SCADA control subsystem, at least one control action. This allows corrective action(s) and/or mitigating action(s) to be triggered.

The electric power system may comprise the HMI. The HMI may be installed in a control center, e.g., in a power transmission and/or distribution grid control room.

Thereby, the processing system aids a power grid operator in his/her complex tasks.

The electric power system may comprise an electric power generation, transmission, and/or distribution system.

Thereby, the processing system is operative for use in association with an electric power system.

The electric power system may comprise an electric power transmission and/or distribution grid.

Thereby, the processing system is operative for use in association with an electric power system for which conventional techniques have shortcomings.

According to a further aspect of the invention, there is provided a processing method for an electric power system. The processing method comprises: receiving, by a processing system, operating data of the electric power system; and processing, by at least one processing circuit of the processing system, the operating data, comprising: determining, based on the operating data, an active power and a reactive power of an operating point of a node of the electric power system; determining, based on the operating point, a permissible reactive power range for which a node voltage is within a permissible voltage range, and a permissible active power range for which the node voltage is within the permissible voltage range, the permissible reactive power range being determined for the active power of the operating point and the permissible active power range being determined for the reactive power of the operating point; and performing at least one interface control action to cause or enable outputting of a node loadability representation for the node that comprises at least one first range indicator indicating the permissible active power range along a direction; and/or at least one second range indicator indicating the permissible reactive power range along the direction.

Various effects and advantages are attained by the processing method. The processing method is operative to provide node loadability representation such that it can indicate the permissible reactive power range and/or the permissible active power range, respectively by graphical element(s) positioned along the direction such that their length(s) and/or spacing quantifies the permissible reactive power range and/or the permissible active power range. By causing or enabling outputting of the node loadability representation such that the graphical representation extends along the direction to quantify the permissible active power range and/or the permissible reactive power range, the node loadability data can be provided in a compact form. Moreover, as the representation is dependent on one coordinate along the direction, the processing method provides the node loadability representation in a manner that mitigates the risk of incorrect interpretation and that facilitates identification of the control action(s) to be taken.

The processing method may cause outputting of the node loadability representation such that it includes both the at least one first range indicator indicating the permissible active power range and the at least one second range indicator indicating the permissible reactive power range in an overlapping manner.

Thereby, the node loadability representation can be provided in a particularly compact and comprehensive manner, indicating the possible action that are viable to bring the operating point to a permissible operating region.

Optional features of the processing method and the effects attained thereby may correspond to the features and associated effects described in association with the processing system.

The processing method may be performed automatically by the processing system, the control and/or monitoring system, or the electric power system according to an aspect or embodiment.

According to a further aspect of the invention, there is provided a control method of controlling primary system equipment and/or secondary system equipment of an electric power system (e.g., of a power distribution grid and/or a power transmission grid), comprising performing the processing method according to an aspect or embodiment and causing, by the processing system, a control action to be performed based on a node loadability analysis.

Thereby, the effects attained in association with the processing method are attained and utilized in a control method.

According to a further aspect of the invention, there is provided an operating method of operating primary system equipment and/or secondary system equipment of an electric power system (e.g., of a power distribution grid and/or a power transmission grid), comprising performing the processing method according to an aspect or embodiment and operating, by the processing system, the primary system equipment and/or secondary system equipment of the electric power system based on a node loadability analysis.

Thereby, the effects attained in association with the processing method are attained and utilized in a method of operating electric power system equipment.

According to a further aspect, there is provided machine-readable instruction code which, when executed by at least one programmable processing circuit, causes the at least one programmable processing circuit to perform the processing method, the control method, or the operation method according to any aspect or embodiment disclosed herein.

According to a further aspect, there is provided a non-transitory storage medium having stored thereon machine-readable instruction code which, when executed by at least one programmable processing circuit, causes the at least one programmable processing circuit to perform the processing method, the control method, or the operation method according to any aspect or embodiment disclosed herein.

Various effects and advantages are attained by embodiments of the invention. For illustration, the processing systems and methods according to embodiments provide enhanced techniques of providing results of a node loadability analysis. The processing systems and methods are operative to provide the node loadability analysis results in a comprehensive representation that is efficient with regard to screen space usage and that reduces the risk of misinterpretation.

### BRIEF DESCRIPTION OF THE DRAWINGS

Embodiments of the invention will be described with reference to the drawings in which similar or identical reference signs designate elements with similar or identical configuration and/or function.
Fig. 1 is a block diagram of a processing system.
Fig. 2 is a schematic representation of HMI output generated under the control of the processing system.
Fig. 3 is a schematic representation of a diagram showing active and reactive powers.
Fig. 4 is a schematic representation of HMI output generated under the control of the processing system.
Fig. 5 is a schematic diagram of an electric power system comprising the processing system.
Fig. 6 is a flow chart of a processing method.
Fig. 7 is a flow chart of a processing method.
Fig. 8 is a flow chart of a processing method.
Fig. 9 is a schematic representation of HMI output generated under the control of the processing system.
Fig. 10 is a schematic representation of a system comprising the processing system.
Fig. 11 is a schematic representation of an electric power system.
Fig. 12 is a schematic representation of an electric power system.

### DETAILED DESCRIPTION OF EMBODIMENTS

Embodiments of the invention will be described with reference to the drawings. In the drawings, similar or identical reference signs designate elements with similar or identical configuration and/or function.

Embodiments relate to processing systems and methods capable of processing operating data of an electric power system, perform a node loadability analysis, and control an HMI to provide a node loadability representation indicative of the results of the node loadability analysis. While embodiments will be described in detail primarily in association an electric power system that comprises a power transmission and/or power distribution system, the embodiments are not limited thereto.

As used herein, the term "electric power system" encompasses an electric power generation, transmission, and/or distribution system, e.g., an electric power grid or parts thereof.

As used herein, the term "power grid" encompasses a power transmission grid and/or a power distribution grid. The power grid may comprise both a power transmission grid and a power distribution grid. The term "power grid" encompasses a microgrid, optionally a microgrid comprising a distributed energy resource (DER).

As used herein, the term "operating data" encompasses measurements and event-based data. The monitoring data may comprise measurements and/or event-based data (e.g., GOOSE messages). The measurements may comprise any one or any combination of measurements related to electric variables of a power grid or components thereof (such as voltages, currents, phasor measurement unit (PMU) measurements, and/or frequency measurements), switchgear status (such as an open / closed status of an isolator and/or breaker), thermal variables (such as temperature measurements), insulation parameters (such as dissolved gas analysis (DGA) concentrations of an insulation oil or other insulation fluid, insulation moisture content, etc.). The monitoring data may be received by the processing system from secondary system components (e.g., intelligent electronic devices (lEDs)) of the electric power system.

As used herein, the term "node loadability analysis" refers to an analysis that identifies, for at least one and typically several or all nodes of an electric power network, a capacity of the node to accommodate additional load without compromising system stability and reliability. The term "node loadability analysis" encompasses an analysis that can be performed using any one of a variety of techniques to determine the node loadability. Power flow techniques, sensitivity analysis, and/or dynamic system simulations are examples for such techniques.

As used herein, the term "node loadability representation" encompasses a visualization of a result of the node loadability analysis. The visualization may be a visualization in which active power, reactive power, a permissible active power range and/or a permissible reactive power range are shown along a direction.

As used herein, the "direction" may in particular be a linear direction, with powers or power ranges being quantified by a position or position range along the linear direction. As used herein, "linear" means in particular "along a straight line," i.e., rectilinear.

While the operation of the processing system and method will be explained in association with the node loadability representation of a node, the processing system and method are operative to perform the operations for any one of several nodes. The processing system and method may be operative to repeat the various operations continually (i.e., on an ongoing basis), updating the node loadability representations responsive to changes and/or in (at least approximately) real time.

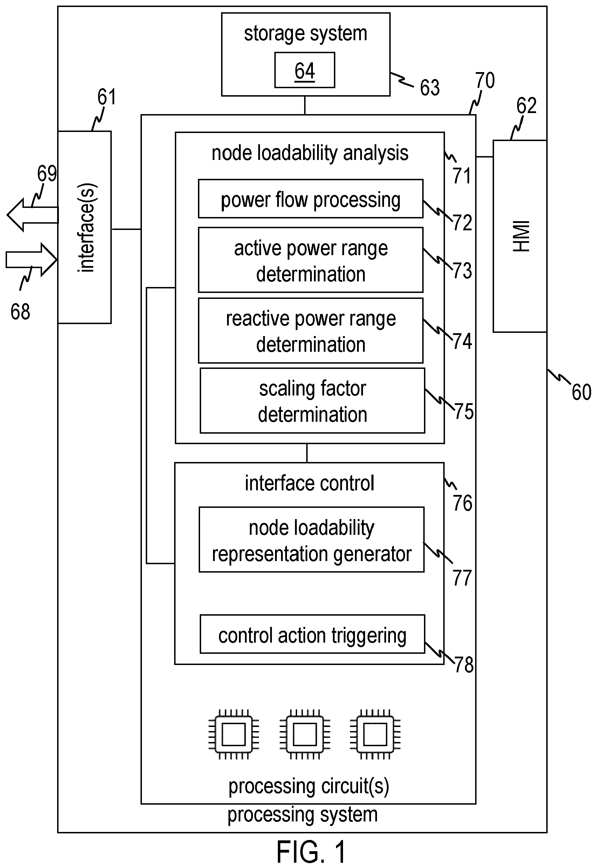

Fig. 1 shows a block diagram representation of the processing system 60. The processing system 60 comprises an at least one interface 61. The at least one interface 61 may comprise a data interface or other communication interface. The at least one interface 61 is operative to receive operating data 68 obtained for an electric power system. The operating data may comprise measurements. The measurements may comprise any one or any combination of measurements related to electric variables of a power grid or components thereof (such as voltages, currents, phasor measurement unit (PMU) measurements, and/or frequency measurements), thermal variables (such as temperature measurements), insulation parameters (such as dissolved gas analysis (DGA) concentrations of an insulation oil or other insulation fluid, insulation moisture content, etc.). The operating data may be received by the processing system from secondary system components (e.g., intelligent electronic devices (lEDs)) of the electric power system. Additionally or alternatively to measurements, the operating data 68 may comprise event-based data (e.g., GOOSE messages).

The processing system 60 may comprise an HMI 62. The HMI 62 may comprise an HMI installed in a power transmission system control room and/or power distribution system control room. The HMI 62 may comprise an HMI installed in a power grid control room (e.g., in a national or regional control center). The HMI 62 is operative to output the node loadability representation, responsive to the received operating data.

The processing system 60 may comprise a storage system 63 or may be communicatively interfaced with the storage system 63. The storage system 63 may have stored therein data 64 that is usable for the node loadability analysis. The data 64 may comprise data specifying operating limits of various components, without being limited thereto.

The processing system 60 comprises at least one processing circuit 70. In the illustrated implementation, the at least one processing circuit 70 is operative to perform a node loadability analysis 71. The node loadability analysis 71 may determine for at least one node, typically for each one of several nodes of an electric power system (such as a power transmission and/or distribution system), ranges within a space spanned by active and reactive powers in which operation of complies with the predefined criteria, such as conformity with predefined voltage limits. The node loadability analysis 71 may comprise a power flow processing 72. Alternatively or additionally, other techniques may be used, such as a sensitivity analysis, a dynamic system simulation, and/or the techniques as disclosed in W.Q. Sun et al., "Power System Node Loadability Evaluation Using Flexibility Analysis Method," ELEKTRONIKA IR ELEKTROTECHNIKA, ISSN 1392-1215, VOL. 20, NO. 6, 2014.

The node loadability analysis 71 may comprise an active power range determination 73. The permissible active power range determination 73 is operative to identify which range of active powers, if any, results in operation in conformity with a desired criterion, such as a node voltage that lies within a range of permissible node voltages for the respective node, provided that the reactive power is that of the operating point for the node. Thereby, the permissible active power range determination 73 is operative to identify a permissible active power range (with the term "permissible" indicating conformity with the criterion, such as a node voltage that lies within the voltage limits that may be predefined or configurable) such that any active power within the permissible active power range in combination with the reactive power of the operating point for the node ensures conformity with the criterion (such as the node voltage lying within a predefined voltage limits).

The node loadability analysis 71 may comprise a reactive power range determination 74. The permissible reactive power range determination 74 is operative to identify which range of reactive powers, if any, results in operation in conformity with a desired criterion, such as a node voltage that lies within a range of permissible node voltages for the respective node, provided that the active power is that of the operating point for the node. Thereby, the permissible reactive power range determination 74 is operative to identify a permissible reactive power range (with the term "permissible" indicating conformity with the criterion, such as a node voltage that lies within the voltage limits that may be predefined or configurable) such that any reactive power within the permissible reactive power range in combination with the active power of the operating point for the node ensures conformity with the criterion (such as the node voltage lying within a predefined voltage limits).

The node loadability analysis 71 may optionally comprise a scaling factor determination 75. The scaling factor determination 75 is performed to determine a scaling factor (or scale) by which reactive powers and active powers are to be scaled relative to each other in the node loadability representation. The scaling factor determination 75 is operative to determine the scaling factor based on the active and reactive force of the operating point, further optionally in association with a stability boundary determined by the node loadability analysis 71. The stability boundary determines the boundary of operating points at which voltage collapse will occur. The scaling factor determination 75 allows the results of the node loadability analysis to be incorporated into a compact, easily interpretable, yet comprehensive node loadability representation that combines information on both active and reactive powers.

The at least one processing circuit 70 is operative to perform an interface control 76. The interface control 76 may be operative to control the HMI 62 and/or the at least one data interface 61 to cause or to enable outputting of the node loadability representation. To this end, the interface control 76 may be operative to control the at least one data interface 61 to provide output 69 that enables or causes a graphical user interface (GUI) separate from the processing system 60 to output the node loadability representation. Alternatively or additionally, the interface control 76 may control the HMI 62 to output the node loadability representation.

The interface control 76 may comprise a node loadability representation generator 77. The node loadability representation generator 77 is operative to generate a visualization of the results of the node loadability analysis, in which information on both active and reactive powers is included along a same direction (i.e., along a same straight line). Thus, the node loadability representation generator 77 is operative such that the node loadability representation is different from a two-dimensional representation in which active and reactive powers are represented along mutually orthogonal coordinate axes.

The interface control 76 may also be operative to perform a control action triggering 78. The control action triggering 78 may control the HMI 62 to enable operator input and to initiate a control action responsive to the operator input. Examples for such control actions comprise changes to settings of primary and/or secondary electronic power system equipment.

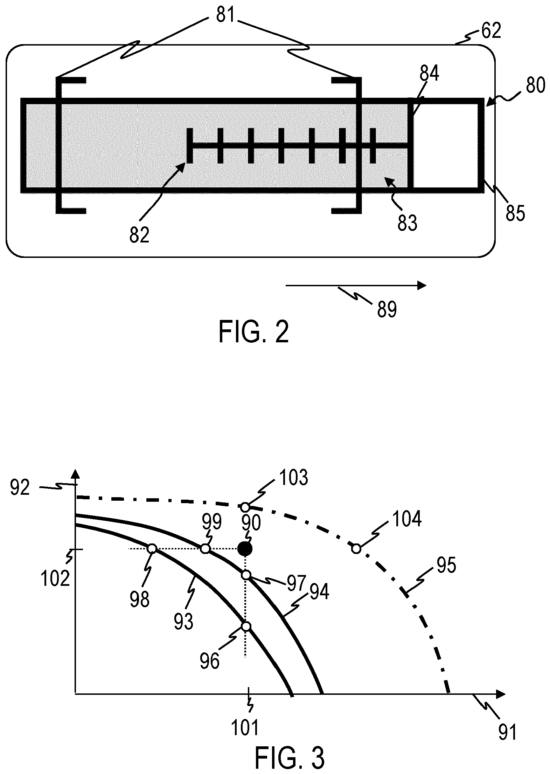

Fig. 2 is a schematic representation of a node loadability representation 80. The processing system 60 and/or the processing methods may be operative to determine and to generate the node loadability representation 80 as generally described herein.

The processing system 60 and/or the processing methods are operative to generate the node loadability representation 80 such that both information relating to active power and information relating to reactive power are shown along a same direction 89. The direction 89 may be a rectilinear direction, with a position and/or distance along the direction 89 being indicative of power.

The processing system 60 and/or the processing methods may be operative to generate the node loadability representation 80 such that it comprises at least one first range indicator 81 indicating the permissible active power range, with the first range indicator 81 having a length (e.g., in Fig. 2, a distance between two markings) and position (e.g., in Fig. 2, a position of the two markings) along the direction 89 that quantifies a lower limit and an upper limit for the permissible active power. Any active power within the range of permissible active powers quantitatively indicated by the first range indicator results in a node voltage within voltage limits of, e.g., a system-specific safety criterion, when combined with the reactive power of the operating point.

The processing system 60 and/or the processing methods may be operative to generate the node loadability representation 80 such that it comprises at least one second range indicator 82 indicating the permissible reactive power range, with the second range indicator 82 having a length (e.g., in Fig. 2, a length of a ticked bar measured along the direction) and position (e.g., in Fig. 2, a lower and/or upper limit of the ticked bar) along the direction 89 that quantifies a lower limit and an upper limit for the permissible reactive power. Any reactive power within the range of permissible reactive powers quantitatively indicated by the second range indicator 82 results in a node voltage within voltage limits of, e.g., a system-specific safety criterion, when combined with the active power of the operating point.

The processing system 60 and/or the processing methods may be operative to generate the node loadability representation 80 such that it comprises an operating point indicator 83 indicating the power(s) of the operating point (e.g., the most recent or present operating point of the respective node). The operating point indicator 83 may comprise a bar extending along the direction 89. For compactness of representation and, thus, a reduction in the screen space requirements, the node loadability representation 80 may be configured such that the operating point indicator 83 indicates both the active power and the reactive power. Thus, for reasons of consistency, the processing system 60 and/or the processing methods allow the scaling factor for the first range indicator 81 and the second range indicator 82 to be different. The processing system 60 and/or the processing methods may be operative to determine, based on the active power of the operating point as compared to an active power at the upper safety limit (corresponding to the upper voltage limit for node voltage) and further based on the reactive power of the operating point as compared to a reactive power at the upper safety limit (corresponding to the upper voltage limit for node voltage), a scaling factor by which the second range indicator 82 is scaled relative to the first range indicator 81, or vice versa. Thereby, the first range indicator 81 represents the permissible active power range in relation to the active power (represented by an end 84 of the bar that forms the operating point indicator 83) at the operating point, and the second range indicator 82 represents the permissible reactive power in relation to the reactive power (that is also represented by the end 84 of the bar that forms the operating point indicator 83) at the operating point. Consistency is attained while providing a compact node loadability representation that visualizes how active power can be changed, if at all, to reach an active power within the permissible active power range (without having to change reactive power) and that also visualizes how reactive power is can changed, if at all, to reach a reactive power within the permissible reactive power range (without having to change active power).

The processing system 60 and/or the processing methods may be operative to generate the node loadability representation 80 such that a size and/or position of the operating point indicator 83 relative to a reference mark 85 indicates how far the active power is from the stability boundary and how far the reactive power is from the stability boundary. As previously explained, the introduction of the scaling factor that is applied to determine the scaling factor of the second range indicator 82 relative to the first range indicator 81, or vice versa, ensures consistency in the sense that the position of the operating point indicator 83 relative to the reference mark can indicate both how far the active power is from the stability boundary and how far the reactive power is from the stability boundary.

Fig. 3 is a schematic representation of results of a node loadability analysis. Operation of the processing system 60 and/or of the processing methods may be explained in greater detail with reference to Fig. 3, wherein active powers are represented along a coordinate axis 91 and reactive powers are represented along a further coordinate axis 92 orthogonal to the coordinate axis 91.

An operating point 90 for a node is associated with an active power 101 and a reactive power 102. A node voltage is within voltage limits (that may be pre-defined or configurable) when the active and reactive powers correspond to an operating point between a first curve 93 and a second curve 94. Thus, an objective of the processing system 60 and/or the processing method is to provide guidance on how the operating point is to be changed to attain this.

To determine the permissible active voltage range, the processing system 60 and/or processing methods determine active power limits 98, 99 that, in combination with the reactive power 102 of the operating point 90, result in a node voltage within the voltage limits.

To determine the permissible reactive voltage range, the processing system 60 and/or processing methods determine reactive power limits 96, 97 that, in combination with the active power 101 of the operating point 90, result in a node voltage within the voltage limits.

To determine a scaling factor by which the second range indicator 82 needs to be scaled relative to the first range indicator 81, or vice versa, to provide a consistency representation of both active and reactive powers along a same direction, the processing system 60 and/or the processing methods may be operative to: determine a first difference in reactive power from the operating point 90 (having the reactive power 102) to a point 97 at which the upper curve 94 (corresponding to the upper safe voltage limit) has the active power 101 of the operating point 90; determine a second difference in active power from the operating point 90 (having the active power 101) to another point 99 at which the upper curve (corresponding to the upper safe voltage limit) has the reactive power 102; and determine a quotient of the first difference and the second difference to determine the scaling factor.

Powers 103, 104 on the stability curve 95 at the active power 101 and/or the reactive power 102 can also be taken into account for determining the scaling factor.

The relative arrangement of the first and second range indicators 81, 82 and/or the operating point indicator 83 is dependent on electric power system topology, system components, and operating conditions.

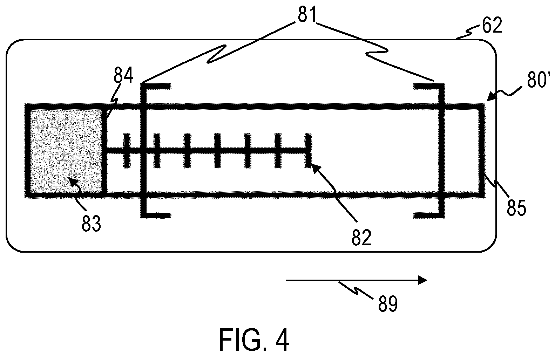

Fig. 4 schematically illustrates a further node loadability representation 80' that comprises the first and second range indicators 81, 82 and the operating point indicator 83. The relative arrangement and size of the components is different from that in Fig. 2, due to the differences in electric power system state.

The active and reactive powers are generally visualized by elements extending along a same direction 89. The direction 89 is a linear direction along a straight line.

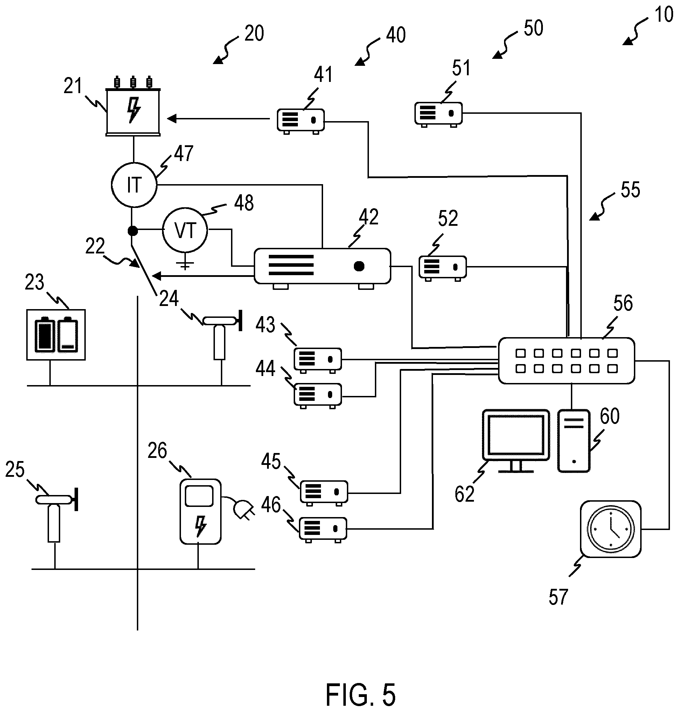

Fig. 5 is a schematic representation of an electric power system 10 according to an embodiment. The electric power system 10 comprises a primary system 20. The primary system 20 may be or may comprise an electric power generation, transmission, and/or distribution system, e.g., a power transmission and/or power distribution grid or part thereof. The primary system 20 may comprise at least part of an electric power grid.

The primary system 20 may comprise switchgear such as switches or circuit breakers (CBs) 22, transformers 21, and other primary system equipment. The electric power system 10 may have renewables penetration, with the primary system 20 comprising renewable energy resources 24, 25, energy storage systems (ESS), such as battery storage systems 23. The primary system 20 may also comprise charging infrastructure 26. Such components of non-conventional AC power systems add to the complexity of the electric power system dynamics. In such cases, the processing system 60 is particularly useful, without being limited to such use cases.

The system 10 comprises a secondary system 40. The secondary system 40 comprises a plurality of devices 41, 42, 43, 44, 45, 46. The secondary system 40 comprises measurement instrumentation 47, 48. At least some of the devices 41, 42, 43, 44, 45, 46 of the secondary system 40 may be operative to execute a decision logic to implement a control of components of the primary system 20, such as switchgear 22 or a transformer 21. At least some of the devices 41, 42, 43, 44, 45, 46 of the secondary system 40 may be operative to execute a decision logic based on measurements, such as measurements received from measurement instrumentation 47, 48. The secondary system device(s) 41, 42, 43, 44, 45, 46 may comprise merging units (MUs) operative to provide monitoring data to the processing system 60. Alternatively or additionally, the secondary system device(s) 41, 42, 43, 44, 45, 46 may be operative to provide event-based messages to the processing system 60 as part of the monitoring data. Examples for devices 41, 42, 43, 44, 45, 46 of the secondary system comprise protection relays or other lEDs which may be operative to perform distance protection or time protection or other protection functions. The measurement instrumentation of the secondary system 40 may comprise a current transformer 47, in voltage transformer 48, phasor measurement units, frequency measurement units, or other measurement instrumentation such as measurement instrumentation operative to measure temperature(s), insulation-state related data (such as dissolved gas analysis (DGA) concentrations in an insulation oil or other insulation fluid, or insulation moisture).

The electric power system 10 may optionally comprise a redundancy system 50 which provides redundant implementations for at least some of the functions performed by the devices 41, 42, 43, 44, 45, 46 of the secondary system 40. The redundancy system 50 may be implemented in various ways. For illustration, there may be a dedicated redundant device 51, 52 associated with one of the devices of the secondary system 40 in a one-to-one-correspondence. Other implementations are possible. For illustration, there may be a centralized redundancy system which may provide redundancy for functions performed by several of the secondary system devices 41, 42, 43, 44, 45, 46.

The system 10 comprises a communication system 55. The communication system 55 may comprise a communication network. The communication system 55 may comprise a plurality of communication links by which devices of the secondary system 40 communicate with each other and with the processing system 60. Communication may be performed using communication devices such as gateway devices 58.

As described in more detail herein, the processing system 60 is operative to perform a node loadability analysis, generate a node loadability representation, and control the HMI 62 and/or the data interface(s) 61 to output the node loadability representation. The output of the processing system 60 may comprise control commands to control, e.g., the HMI 62. The processing system 60 may also perform additional control functions. The processing system 60 may be operative such that the output 69 may comprise control commands to secondary system devices 41, 42, 43, 44, 45, 46 and/or redundancy system devices 51, 52.

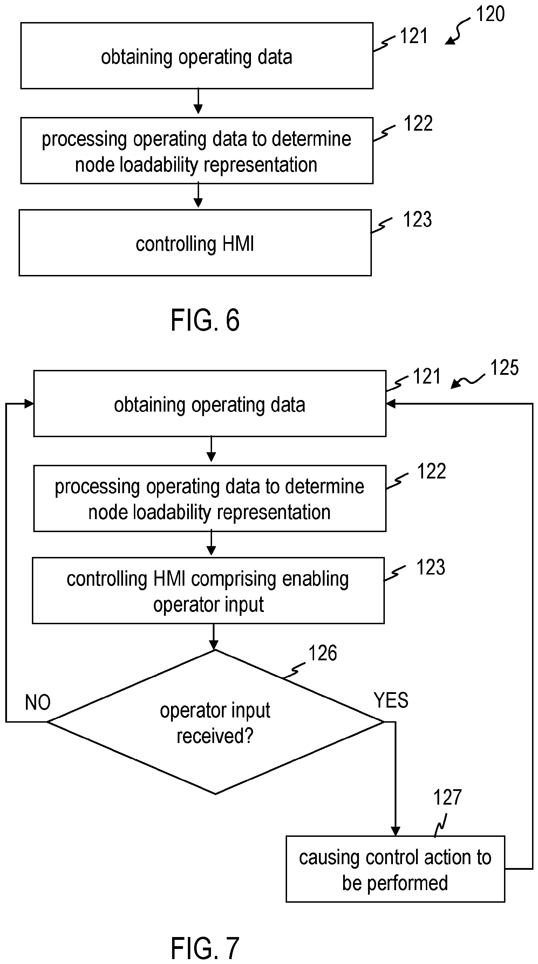

Fig. 6 is a flow chart of a method 120. The method 120 may be performed automatically by the processing system 60 and/or the electric power system 10.

At process block 121, the processing system 60 obtains operating data. Obtaining the operating data may comprise communicatively interfacing, by the processing system, with the secondary system devices to obtain the operating data. The operating data may comprise measurements, event -related messages, or other data..

At process block 122, the processing system 60 performs a node loadability analysis. Performing the node loadability analysis may comprise a power flow analysis, a sensitivity analysis, and/or a dynamic system simulation, without being limited thereto. The processing system 60 determines the node loadability representation, based on the node loadability analysis.

At process block 123, the processing system 60 performs a control action based on the node loadability representation. The control action may cause or may enable the node loadability representation to be output via an HMI, such as a screen and/or another optical output system (e.g., of a control room of an electric power grid).

As regards the node loadability analysis, the processing system 60 and/or processing methods may use any one or any combination several techniques for computing the node loadability in the electric power grid, such as:
- Power flow analysis: Power flow analysis involves solving a set of mathematical equations that represent the flow of power through the grid. Based on data such as generator capacities, load demands, transmission line parameters, and system topology, the power flow analysis can determine the maximum load that each node can accommodate without violating system constraints.
- Dynamic system simulation: Dynamic system simulation is another technique for computing node loadability. This method involves modeling the behavior of the grid under various operating conditions and disturbances. Input data required for dynamic system simulation includes system parameters, generation and demand profiles, and contingency scenarios. By running simulations with different load levels, the node loadability under different operating conditions can be assessed.
- Sensitivity analysis: Sensitivity analysis is a technique that evaluates the impact of changes in input parameters on node loadability. By varying parameters such as generator outputs, transmission line capacities, and load demands, sensitivity analysis can identify critical factors that affect node loadability. This can be used to optimize system operation and improve grid resilience.

The node loadability analysis may use and process system topology, generator capacities, load demands, transmission line parameters, and system constraints to determine node loadability.

Power flow analysis is one example for a technique that may be used in the node loadability analysis. Power flow analysis can be performed to determine the steady-state power flow and voltage profile of the grid. It can also be utilized to calculate node loadability. In order to solve the constrained problem of node loadability determination using power flow analysis, various processing techniques can be employed;
- Newton-Raphson method: The Newton-Raphson method is a technique useful for solving nonlinear equations, which is essential in power flow analysis. By iteratively solving the power flow equations, the Newton-Raphson method can converge to a solution that satisfies the power balance and voltage constraints in the grid. This method can be applied to compute node loadability by gradually increasing the load at each node until a system constraint, such as line capacity or voltage limit, is violated.
- Optimization: Optimization techniques, such as linear programming, nonlinear programming, and genetic techniques, can be applied to solve the constrained problem of node loadability determination. These techniques can be used to maximize the load at each node subject to system constraints, such as line limits, voltage constraints, and generator operating limits. By formulating the problem as an optimization model, the node loadability can be determined.

Sensitivity analysis can be used in conjunction with power flow analysis to determine node loadability by evaluating the impact of changes in system parameters on the loadability of each node. By calculating sensitivity factors for different parameters, such as generator outputs, load demands, and line capacities, operators can assess the influence of these factors on node loadability. This information can help the processing system 60 to identify critical nodes and system components.

Fig. 7 is a flow chart of a method 125. The method 125 may be performed automatically by the processing system 60 and/or the electric power system 10.

Process blocks 121, 122, and 123 may be performed as explained with reference to Fig. 6. At process block 123, the HMI may be controlled to enable an operator input. Controlling the HMI may comprise controlling the HMI to enable an operator input based on the node loadability representation.

At process block 126, it is determined whether an operator input is received via the HMI. Process block 126 may comprise determining whether an operator input is received that is intended to change active and/or reactive power for at least one node. If no operator input is received, the method returns to process block 121. The various process blocks may be repeated continually (i.e., on an ongoing basis) during field operation of the electric power system.

At process block 127, responsive to the operator input, the processing system may cause a control action to be performed to adjust the active and/or reactive power. The control action may comprise adjusting settings of at least one secondary system devices and/or a control action affecting primary system equipment of the electric power system. The method then returns to process block 121.

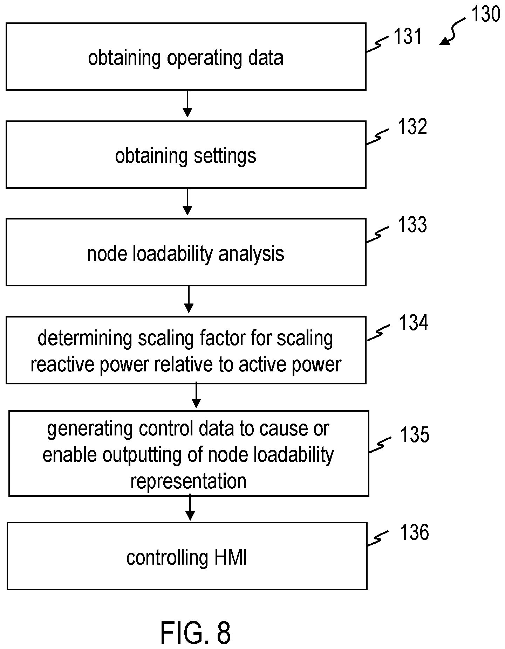

Fig. 8 is a flow chart of a method 130. The method 130 may be performed automatically by the processing system 60 and/or the electric power system 10.

At process block 131, operating data are obtained. Process block 131 may be implemented as previously explained with reference to process block 121 of Fig. 6.

At process block 132, electric power system settings may be obtained. Obtaining the electric power system settings may comprise retrieving or otherwise obtaining settings that specify the voltage limits for a node voltage, for use in determining the node loadability. Obtaining the electric power system settings may comprise retrieving or otherwise obtaining settings that specify the voltage limits for a node voltage for use in determining the permitted active power range and the permitted reactive power range.

At process block 133, the node loadability analysis is performed. Process block 133 may be implemented as previously explained with reference to process block 122 of Fig. 6.

At process block 134, a scaling factor is determined that is used to scale the second range indicator 82, 112 relative to the first range indicator 81, 111. The scaling factor may be determined based on active and reactive powers at the operating point 90 as compared to points 97, 99 on the curved 94 corresponding to the upper save voltage limit for the node voltage.

At process block 135, the processing system 60 generates control data that are operative to cause or enable outputting of the node loadability representation.

At process block 136, the processing system 60 controls at least one interface to cause outputting of the node loadability representation via the HMI.

As previously mentioned, the processing system 60 and/or the processing methods may be operative to determine the node loadability representation that visualized as results of node loadability analysis not only for one, but for several or potentially even all nodes of the electric power system. The processing system 60 and/or the processing methods may be operative to cause the node loadability representations to be output via the HMI such that, for each of the several nodes, the node loadability representation for the respective is output at a location on a network in a diagram that corresponds to the node. This further assists in power system control and/or monitoring, as node loadability data is visually associated with the respective nodes according to the network topology.

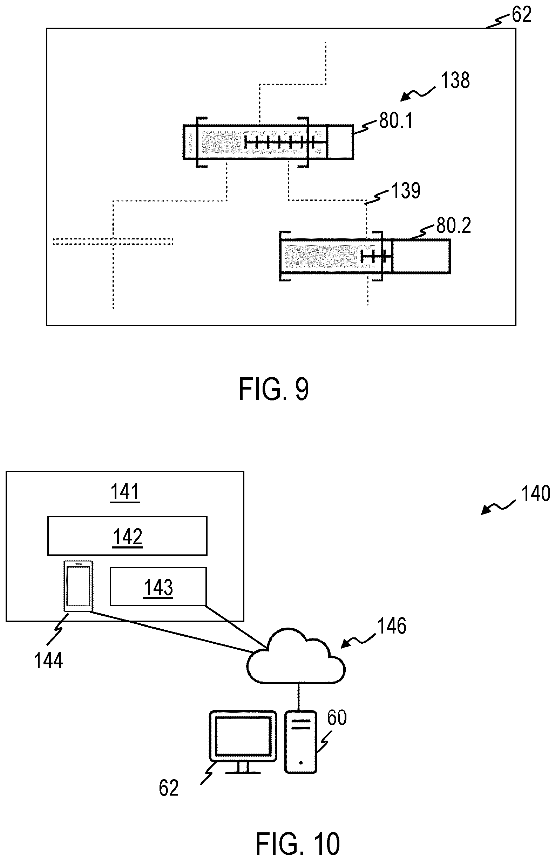

Fig. 9 is a schematic representation of the HMI 62 as controlled by the processing system 60 and/or the processing methods. The HMI 62 outputs a graphical representation 138 in accordance with the network topology, with node loadability representations 80.1, 80.2 being included at locations that correspond to the nodes to which the respective node loadability representation pertains. Connections 139 between the nodes may be indicated as links between the node loadability representations 80.1, 80.2.

Fig. 10 is a schematic representation of a system 140 which comprises an electric power grid 141. The electric power grid comprises primary system equipment 142, which may comprise transformers, reactances, switchgear, power grid branches, without being limited thereto. The system 140 comprises an operator communication system 143 of a power grid operator. The processing system 60 may be operative, responsive to the node loadability analysis, to automatically establish a communication link over a communication system 146 to the operator communication system 143 or a terminal device 144 of the operator. Thereby, the results of the node loadability analysis may be output remotely from the processing system 60.

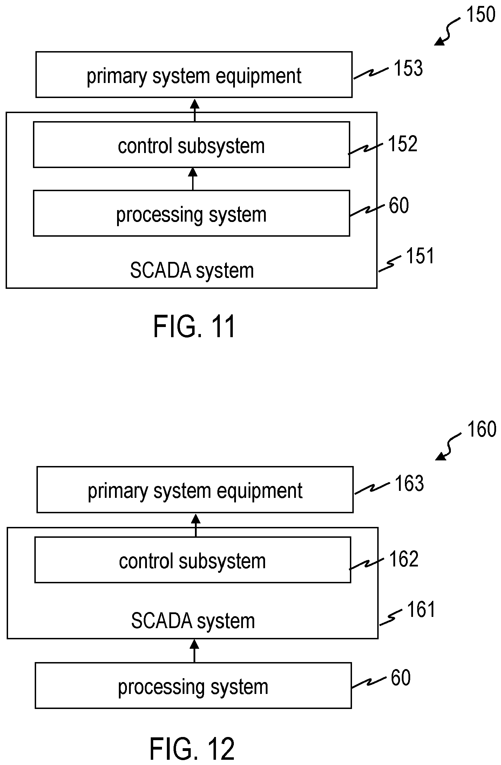

Fig. 11 shows a schematic representation of an electric power system 150 according to an embodiment. The electric power system 150 comprises primary system equipment 153 and a SCADA system 151. The SCADA system 151 comprises the processing system 60 and a SCADA control subsystem 152 communicatively interfaced with the processing system 60. The SCADA control subsystem 152 is operative to perform control actions responsive to the output 69 provided by the processing system 60. The control actions may be dependent on the further operator input enabled by the processing system 60.

Fig. 12 shows a schematic representation of an electric power system 160 according to an embodiment. The electric power system 160 comprises primary system equipment 163 and a SCADA system 161. The SCADA system 60 comprises a SCADA control subsystem 162. The SCADA system 161 is communicatively interfaced with the processing system 60. The SCADA control subsystem 162 is operative to perform control actions responsive to the output 69 provided by the processing system 60. The control actions may be dependent on the further operator input enabled by the processing system 60.

Various effects and advantages are attained by the processing system, method, and electric power system according to embodiments. The processing system and method provide enhanced techniques of electric power system control and/or monitoring using a node loadability analysis. The processing system and method allow a control action to be performed so as to facilitate the outputting of a node loadability representation, based on the node loadability analysis, that provides a compact representation both with respect to active power and with respect to reactive power.

The processing systems and methods mitigate the risk of inadequate response to the node loadability analysis.

While embodiments have been described in detail with reference to the drawings, various modifications may be implemented in other embodiments. For illustration rather than limitation:
- While embodiments have been described in association with an electric power grid, the techniques disclosed herein may also be used in association with a distributed energy resource (DER) control system or a microgrid control system.
- While embodiments have been described in which the processing system 60 is comprised by or communicatively interfaced with a SCADA system, the processing system 60 can also be used in other use cases.

Embodiments may be used in association with a power grid having renewables penetration, such as power grid comprising renewable energy systems (such as DERs), without being limited thereto.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A processing system (60) for an electric power system (10; 140; 150; 160), the processing system (60) comprising:
at least one interface (61) operative to receive operating data (68) of the electric power system (10; 140; 150; 160); and
at least one processing circuit (70) operative to process the operating data (68), the at least one processing circuit (70) being operative to:
determine, based on the operating data (68), an active power and a reactive power (102) of an operating point (90) of a node of the electric power system (10; 140; 150; 160);
determine, based on the operating point (90), a permissible reactive power range for which a node voltage is within a permissible voltage range, and a permissible active power range for which the node voltage is within the permissible voltage range, the permissible reactive power range being determined for the active power (101) of the operating point (90) and the permissible active power range being determined for the reactive power (102) of the operating point (90); and
perform at least one interface control action to cause or enable outputting of a node loadability representation (80; 80'; 80.1, 80.2) for the node that comprises:
at least one first range indicator (81) indicating the permissible active power range along a direction (89); and
at least one second range indicator (82) indicating the permissible reactive power range along the direction (89).

2. The processing system (60) of claim 1, wherein the at least one processing circuit (70) is operative to perform the at least one interface control action such that the node loadability representation (80; 80'; 80.1, 80.2) further comprises an operating point indicator (83) indicating the active power (101) of the operating point (90).

3. The processing system (60) of claim 2, the at least one processing circuit (70) is operative to perform the at least one interface control action such that the operating point indicator (83) indicates both the active power (101) of the operating point (90) and the reactive power (102) of the operating point (90).

4. The processing system (60) of claim 3, wherein the at least one processing circuit (70) is operative to determine a scaling factor for the at least one second range indicator (82) relative to the at least one first range indicator (81) based on the active power (101) of the operating point (90) and the reactive power (102) of the operating point (90).

5. The processing system (60) of any one of the preceding claims, wherein the at least one processing circuit (70) is operative to further determine a stability boundary (95) that, when exceeded by the operating point (90), would result in voltage collapse, wherein the at least one processing circuit (70) is operative to perform the at least one interface control action such that the node loadability representation (80; 80'; 80.1, 80.2) is further dependent on the stability boundary (95).

6. The processing system (60) of claim 5 when dependent on any one of claims 2 to 4, wherein the at least one processing circuit (70) is operative to perform the at least one interface control action such that a size of the operating point indicator (83) is dependent on the stability boundary (95).

7. The processing system (60) of any one of the preceding claims, wherein the at least one processing circuit (70) is operative to perform the at least one interface control action such that the at least one second range indicator (82) is superimposed on the at least one first range indicator (81) or vice versa.

8. The processing system (60) of any one of the preceding claims, wherein the at least one processing circuit (70) is operative to perform a power flow processing to determine the permissible reactive power range and the permissible active power range.

9. The processing system (60) of any one of the preceding claims, wherein the at least one processing circuit (70) is operative to perform the at least one interface control action such that the direction (89) is a linear direction (89).

10. The processing system (60) of any one of the preceding claims, wherein the at least one processing circuit (70) is operative to perform the at least one interface control action to cause the node loadability representation (80; 80'; 80.1, 80.2) to be output adjacent a representation of the node on a network representation (138) of the electric power system (10; 140; 150; 160).

11. The processing system (60) of claim 10, wherein the at least one processing circuit (70) is operative to determine a plurality of node loadability representations (80.1, 80.2), each related to one of a plurality of nodes of the electric power system (10; 140; 150; 160), and to perform the at least one interface control action to cause each of the node loadability representations (80.1, 80.2) to be output adjacent a representation of an associated node of the electric power system (10; 140; 150; 160) for which the respective node loadability representation (80; 80'; 80.1, 80.2) has been determined.

12. A control and/or monitoring system (151), comprising the processing system (60) of any one of the preceding claims.

13. An electric power system (10; 140; 150; 160), comprising:
a primary system (10) comprising primary system equipment (21-26; 132);
a secondary system (40) operative to perform control and/or monitoring functions for the primary system (10); and
the processing system (60) of any one of claims 1 to 11 or the control and/or monitoring system of claim 12 operative to communicatively interface with the secondary system (40) to obtain the operating data (68).

14. The electric power system (10; 140; 150; 160) of claim 13, wherein the electric power system (10; 140; 150; 160) comprises at least one of: a power transmission system ; a power distribution system; a power grid.

15. A processing method for an electric power system (10; 140; 150; 160), the processing method comprising:
receiving, by a processing system (60), operating data (68) of the electric power system (10; 140; 150; 160);
processing, by at least one processing circuit (70) of the processing system (60), the operating data (68), comprising:
determining, based on the operating data (68), an active power and a reactive power (102) of an operating point (90) of a node of the electric power system (10; 140; 150; 160);
determining, based on the operating point (90), a permissible reactive power range for which a node voltage is within a permissible voltage range, and a permissible active power range for which the node voltage is within the permissible voltage range, the permissible reactive power range being determined for the active power (101) of the operating point (90) and the permissible active power range being determined for the reactive power (102) of the operating point (90); and
performing at least one interface control action to cause or enable outputting of a node loadability representation (80; 80'; 80.1, 80.2) for the node that comprises:
at least one first range indicator (81) indicating the permissible active power range along a direction (89); and
at least one second range indicator (82) indicating the permissible reactive power range along the direction (89).
